(19) Europäisches Patentamt
European Patent Office
Office européen des brevets

(11) **EP 4 488 422 B1**

(12) **EUROPEAN PATENT SPECIFICATION**

(45) Date of publication and mention
of the grant of the patent:
**08.04.2026 Bulletin 2026/15**

(21) Application number: **23461617.5**

(22) Date of filing: **04.07.2023**

(51) International Patent Classification (IPC):
***C25D 11/26*** *(2006.01)*

(52) Cooperative Patent Classification (CPC):
**C25D 11/26**

(54) **A METHOD OF SURFACE MODIFICATION OF TITANIUM BY PRODUCING TITANIUM DIOXIDE NANOTUBES AND GRAPHENE TRANSFER OR VACUUM DEPOSITION OF CARBON**

VERFAHREN ZUR OBERFLÄCHENMODIFIZIERUNG VON TITAN DURCH HERSTELLUNG VON TITANDIOXID-NANORÖHREN UND GRAPHENTRANSFER ODER VAKUUMABSCHEIDUNG VON KOHLENSTOFF

PROCÉDÉ DE MODIFICATION DE SURFACE DE TITANE PAR PRODUCTION DE NANOTUBES DE DIOXYDE DE TITANE ET TRANSFERT DE GRAPHÈNE OU DÉPÔT SOUS VIDE DE CARBONE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**08.01.2025 Bulletin 2025/02**

(73) Proprietor: **Uniwersytet Zielonogórski**
**65-417 Zielona Góra (PL)**

(72) Inventor: **Arkusz, Katarzyna**
**64-510 Wronki (PL)**

(74) Representative: **JD&P Patent Attorneys**
**Joanna Dargiewicz & Partners**
**ul. Mysliborska 93A/50**
**03-185 Warszawa (PL)**

(56) References cited:
**CN-B- 106 555 188        US-A1- 2012 160 695**
**US-A1- 2015 233 010**

• PARADOWSKA EWA ET AL: "The Influence of the Parameters of a Gold Nanoparticle Deposition Method on Titanium Dioxide Nanotubes, Their Electrochemical Response, and Protein Adsorption", BIOSENSORS, vol. 9, no. 4, 1 December 2019 (2019-12-01), CH, pages 138, XP093104490, ISSN: 2079-6374, DOI: 10.3390/bios9040138

**Description**

The object of the present invention is a method for the surface modification of titanium by producing titanium dioxide nanotubes (TNT) and either graphene transfer or vacuum deposition (also known as vacuum spraying) of carbon. The method makes it possible to adjust the wettability and stationary potential of titanium.

Canadian patent application CA2633531A1 describes a method of producing a nanotube titanium substrate that includes the steps of anodising the titanium substrate with producing of self-organising titanium oxide nanotubes, dispersing gold nanoparticles on the titanium oxide surface, annealing the titanium oxide surface with gold nanoparticles in a non-oxidising atmosphere and depositing carbon on the annealed titanium oxide surface.

Chinese patent application CN113096968A discloses a method for the preparation of anodised titanium oxide nanotubes doped with metal ions. The matrix layer of titanium dioxide nanotubes and a low melting point metal are annealed together. The deposited metals can be metals with a low melting point lower than 430°C, including tin (Sn, melting point 231.89°C), zinc (Zn, melting point 419.53°C) and cadmium (Cd, melting point 320.90°C).

Korean patent application KR20220037109A describes a method of producing a nitrogen-doped titanium dioxide/nitride nanotube composite for photocatalysts.

Chinese patent application CN110394169A relates to a method of producing activated carbon nanotubes and doping titanium nanodioxide with them.

Chinese patent application CN102151561A discloses a method of manufacturing a photocatalyst consisting of carbon nanotubes loaded with titanium dioxide on external surfaces.

US patent application US2011135827A1 describes a method of producing CNT carbon nanotubes coated with $TiO_2$. Also relevant is document "The Influence of the Parameters of a Gold Nanoparticle Deposition Method on Titanium Dioxide Nanotubes, Their Electrochemical Response, and Protein Adsorption" by Paradowska et al., Biosensors 2019, 9(4), 138.

The aim of the invention was to develop a means of regulating the wettability, surface free energy and stationary potential of titanium. No document from the state of the art solves the technical problem indicated above by modifying previously produced titanium dioxide nanotubes (TNT) with carbon compounds.

This was achieved through a two-step chemical modification of titanium, i.e. the production of titanium dioxide nanotubes (TNT) and further modification with graphene.

Thus, an object of the invention is a method of surface modification of titanium by forming a layer of TNT titanium dioxide nanotubes on a titanium substrate using anodisation in a two-electrode system, where the working electrode is a titanium film and the reference electrode is a platinum film, comprising the steps of:

- the titanium foil is cleaned in acetone and distilled water in an ultrasonic cleaner and then dried in a stream of nitrogen;
- titanium nanotubes with a diameter of 50 $\pm$ 5 nm and a height of 1,000 $\pm$ 100 nm are produced by modifying the titanium by anodising in an aqueous solution containing 85 wt% ethylene glycol and 0.65 wt% $NH_4F$, applying a potential of 17 V for 3750 s;
- titanium foil with a layer of titanium nanotubes is further chemically modified by:

  - graphene transfer onto the surface of nanotubes using a PMMA matrix, in which the total surface of the wetted graphene/PMMA film is placed on a titanium film with a layer of titanium nanotubes, the titanium film is then heated to approximately 70°C and treated with acetone vapour to ensure adhesion of the graphene to the surface of the titanium nanotubes, after which the PMMA film is removed by dissolving in acetone.

Advantageously, the PMMA film is removed by dissolving in acetone for 24 hours.

Advantageously, titanium foil with a purity of 99.70% is used.

Advantageously, platinum foil of 99.95% purity is used.

Advantageously, the titanium foil is cleaned in acetone and distilled water for 10 minutes each, respectively, in a 300 W ultrasonic cleaner.

Also an object of the invention is a method of surface modification of titanium using the method above , wherein titanium nanotubes with a diameter of 50 $\pm$ 5 nm and a height of 1000 $\pm$ 100 nm are produced by modifying the titanium by anodizing in an aqueous solution containing 85 wt% ethylene glycol + 0.65 wt% NH 4 F, applying a potential of 17 V at 3750 s and subjecting the TNT layer to further chemical modification by said graphene transfer, thereby imparting highly hydrophilic properties to a titanium surface with a wetting angle (WCA) of 5° to 35°.

Also disclosed but not according to the invention is a method of surface modification of titanium using the method above, wherein titanium nanotubes with a diameter of 50 nm and a height of 1000 nm are produced by modifying the titanium by anodising in an aqueous solution containing 85 wt% ethylene glycol and 0.65 wt% NH 4 F at a potential of 17 V for 3750 s and undergoing further chemical modification by vacuum deposition of carbon with a thickness of < 60 $\pm$ 5 nm, thereby imparting weakly hydrophilic properties to the surface of titanium with a wetting angle (WCA) of 57° to 90°.

Also disclosed but not according to the invention is a method of surface modification of titanium using the method above, wherein titanium nanotubes with a diameter of 50 ± 5 nm and a height of 1000 ± 100 nm are produced by modifying the titanium by anodising in an aqueous solution containing 85 wt% ethylene glycol and 0.65 wt% NH 4 F at a potential of 17 V for 3750 s and subjecting it to further chemical modification by vacuum deposition of carbon with a thickness of > 60 ± 5 nm, thereby imparting hydrophobic properties to a titanium surface with a wetting angle (WCA) greater than 90°.

Also disclosed but not according to the invention is a method of surface modification of titanium using the method above, wherein: - titanium nanotubes with a diameter of 50 ± 5 nm and a height of 1000 ± 100 nm are produced by modifying the titanium by anodising in an aqueous solution containing 85 wt% ethylene glycol + 0.65 wt% NH4F at a potential of 17 V for 3750 s and subjecting it to further chemical modification by vacuum deposition of carbon with a thickness < 60 ± 5 nm, thereby imparting a negative surface charge to a titanium surface with an open circuit potential (OCP) of -300 to -10 mV relative to an Ag/AgCl chlorosilver electrode.

Also an object of the invention is a method of surface modification of titanium using the method above wherein: - titanium nanotubes with a diameter of 50 ± 5 nm and a height of 1,000 ± 100 nm are produced by modifying the titanium by anodising in an aqueous solution containing 85 wt% ethylene glycol + 0.65 wt% NH4 F, applying a potential of 17 V for 3750 s and undergoing further chemical modification by said graphene transfer, thereby imparting a positive surface charge to a titanium surface with an open circuit potential (OCP) of greater than 10 mV relative to an Ag/AgCl chlorosilver electrode.

The object of the invention is shown in the figures, where:

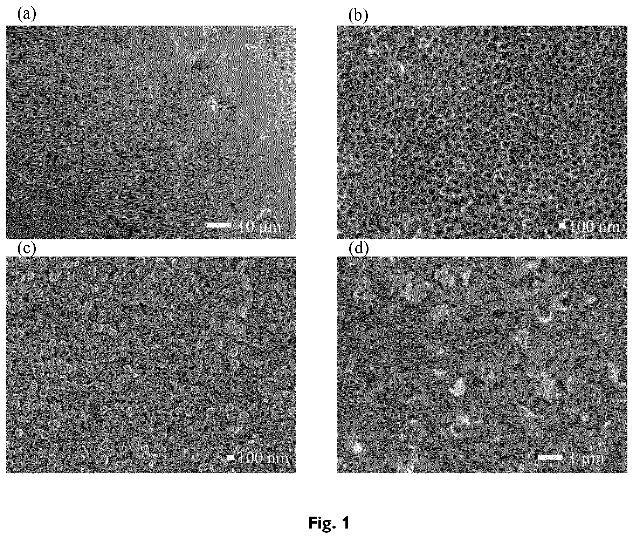

Fig. 1 shows SEM images of the surface of pure titanium - Ti (a), $TiO_2$ nanotube-coated - TNT (b), TNT with vacuum-deposited carbon (c), TNT with transferred graphene (d);

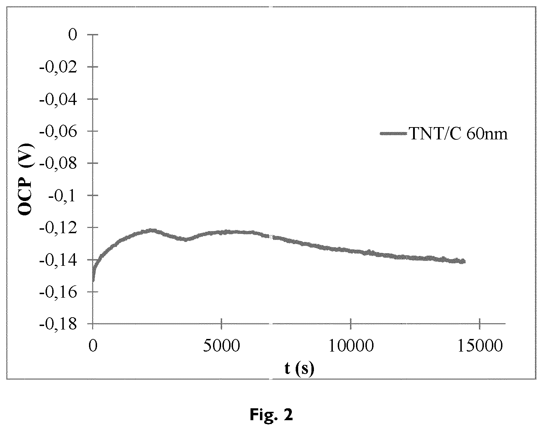

Fig. 2 shows an example of an open circuit permeation (OCP) measurement plot for a TNT sample modified with vacuum-deposited carbon with a layer thickness of 60 ± 5 nm measured in artificial plasma solution.

The invention relates to a method of surface modification of titanium by producing titanium dioxide nanotubes (TNT) with a well-defined morphology and applying chemical modification by either vacuum deposition of carbon or graphene transfer. The developed method of surface modification of titanium allows control over a wide range of physico-chemical properties of titanium, such as surface wettability, surface free energy and stationary potential measured in artificial plasma solution. The fabricated layer is composed of homogeneous, vertically aligned titanium dioxide nanotubes (TNT) on a substrate with a height of 1000 ± 100 nm and a circular base with an outer diameter of 50 ± 5 nm.

This layer is formed by anodising in an ethylene glycol solution with ammonium fluoride. In the following, the description of the invention shows the relationship between the process parameters of the modification of the titanium substrate coated with either TNT graphene or vacuum-deposited carbon and the wettability, surface free energy and stationary potential of the layer formed on the titanium substrate.

The $TiO_2$ nanotube layer is the subject of research by many scientists to determine the physico-chemical properties and potential application mainly in medicine. The uniqueness of the developed method of fabrication and thermal modification lies in its adjustability:

- wettability - from hydrophobic to superhydrophilic surfaces, and
- stationary potential in artificial plasma solution - from strongly negative values to positive values over a very wide range.

These properties allow TNT to be used in a variety of industries, particularly in biomedical engineering as an osteosynthesis-regulating layer, as an antibacterial layer or coating for urological catheters.

In order to produce a layer of titanium dioxide nanotubes (TNT) on a titanium substrate, anodisation was performed in a two-electrode system, where the working electrode was a titanium foil with a purity of 99.70% and a thickness of 0.25 mm, and the reference electrode was a platinum foil with a size of 25 x 25 x 0.05 mm and a purity of 99.95%.

The titanium foil was cut into 20 x 5 x 0.25 mm samples and then subjected to cleaning in acetone and distilled water for 10 minutes each, respectively, in a 300 W ultrasonic cleaner.

After cleaning, the titanium substrates were dried in a stream of nitrogen.

The anodising process was carried out by applying a potential of 17 V for 3750 s. The electrolyte consisted of an aqueous solution containing 85 wt% ethylene glycol with 0.65 wt% ammonium fluoride. The samples were then chemically modified by graphene transfer or vacuum deposition of carbon.

The transfer of HSMG graphene onto the TNT surface (diameter: 50 ± 5 nm, height: 1000 ± 100 nm) was carried out using a poly(methyl methacrylate) - PMMA matrix, in order to maintain high graphene quality and continuous coverage of up to 99% of the surface. Due to the type of graphene transferred onto the TNT surface, the process did not need to be optimised. The complete surface of the wetted graphene/PMMA film was placed on the TNT target substrate. The sample was placed on a hot plate and heated to approximately 70°C. After stretching the film on the TNT-film-graphene system substrate, the adhesion of graphene to the TNT surface was ensured by the action of acetone vapour, which was carried out for about 10 minutes. The sample was then cooled and the PMMA film was dissolved by immersing it in acetone for 24 hours (changing the solvent four times).

The modification (not according to the invention) of TNT with carbon compounds consisted of deposition carbon on the TNT surface with different deposited layer thicknesses, i.e. 35, 50, 60 ± 5 nm. The deposition process was carried out under high vacuum conditions in the chamber of a QUORUM Q150T ES deposition machine using carbon fibres.

A field emission scanning microscope (FESEM, JEOL JSM-7600F) was used to study the morphology of the TNTs produced, with diameter and height values determined.

Wettability tests were conducted using a Klimatest PG-3 goniometer.

Open-circuit potential (open-circuit potential, OCP) measurements were carried out in 0.01 M buffered saline in a three-electrode system, over a period of four hours, with the chlorosilver electrode as the reference electrode.

The surface free energy of the substrate was calculated using the formula:

$$E_{se} = E_{v1} \times cos\theta$$

where: $E_{v1}$ - surface energy between distilled water and air determined at 20 ± 2°C (72.8 mJ/m$^2$), $\theta$ - static wetting angle.

1) Wettability (WCA) of Ti was regulated using the following conditions (items b and c being not according to the invention):

(a) Strong surface hydrophilicity (WCA 5-35°) was obtained by:

■ producing a TNT with a diameter of 50 ± 5 nm and a height of 1000 ± 100 nm, modifying the titanium by anodising in an aqueous solution containing 85 wt% ethylene glycol + 0.65 wt% NH$_4$F, applying a potential of 17 V for 3750 s and subjecting the TNT layer to further chemical modification by transferring graphene as described above onto the TNT surface using a PMMA matrix, provided that high quality graphene is maintained and up to 99% of the surface is continuously covered.

(b) Weak hydrophilicity (WCA 75-90°) was obtained by:

■ producing a TNT with a diameter of 50 ± 5 nm and a height of 1000 ± 100 nm, modifying the titanium by anodising in an aqueous solution containing 85 wt% ethylene glycol + 0.65 wt% NH$_4$F at a potential of 17 V for 3750 s and undergoing further chemical modification by vacuum deposition of carbon with a thickness < 60 ± 5 nm.

(c) Hydrophobicity (WCA >90°) was obtained by:

■ to produce TNT with a diameter of 50 ± 5 nm and a height of 1,000 ± 100 nm by modifying the titanium by anodising in an aqueous solution containing 85 wt% ethylene glycol + 0.65 wt% NH. NH$_4$F at a potential of 17 V for 3750 s and undergoing further chemical modification by vacuum deposition of carbon with a thickness > 60 ± 5 nm.

2) The surface charge of titanium (-465 ± 5 mV) was adjusted using the following conditions (item a being not according to the invention):

(a) Negative surface charge (OCP -300 to -10 mV vs. Ag/AgCl) was obtained by:

■ producing a TNT with a diameter of 50 ± 5 nm and a height of 1000 ± 100 nm, modifying the titanium by anodising in an aqueous solution containing 85 wt% ethylene glycol + 0.65 wt% NH$_4$F at a potential of 17 V for 3750 s and undergoing further chemical modification by vacuum deposition of carbon with a thickness of < 60 ± 5 nm.

(b) A positive surface charge (OCP>10 mV) was obtained by:

■ producing a TNT with a diameter of 50 ± 5 nm and a height of 1000 ± 100 nm, modifying the titanium by anodising in an aqueous solution containing 85 wt% ethylene glycol + 0.65 wt% NH$_4$F, applying a potential of 17 V for 3750 s and subjecting the TNT layer to further chemical modification by transferring graphene as described above onto the TNT surface using a PMMA matrix, provided that high quality graphene is maintained and up to 99% of the surface is continuously covered.

Table 1. Examples of conditions for chemical modification of titanium by anodising and carbon compound deposition to adjust surface wettability

| Forming conditions | WCA [°] | Surface free energy $E_{se}$ [mJ/m$^2$] |
|---|---|---|
| Pure titanium | 56±1 | 39.6÷41.8 |
| strong hydrophilicity (WCA 5-35°) | | |
| TNT manufactured in 85% ethylene glycol + 0.65 wt% NH$_4$F, voltage: 17 V, time: 3750 s | 20±2 | 67.5÷69.2 |
| medium hydrophilicity (WCA 35-75°) | | |
| TNT manufactured in 85% ethylene glycol + 0.65 wt% NH$_4$F, voltage: 17 V, time: 3750 s Chemical modification: graphene transfer | 58±4 | 34.2÷42.8 |
| poor hydrophilicity (WCA 75-90°) | | |
| TNT manufactured in 85% ethylene glycol + 0.65 wt% NH$_4$F, voltage: 17 V, time: 3750 s Chemical modification: vacuum-deposited carbon with a layer thickness of 35 nm. | 81±2 | 8.9÷13.9 |
| TNT manufactured in 85% ethylene glycol + 0.65 wt% NH$_4$F, voltage: 17 V, time: 3750 s Chemical modification: vacuum-deposited carbon with a layer thickness of 50 nm. | 86±2 | 2.5÷7.6 |
| hydrophobicity (WCA >90°) | | |
| TNT manufactured in 85% ethylene glycol + 0.65 wt% NH$_4$F, voltage: 17 V, time: 3750 s Chemical modification: vacuum-deposited carbon with a layer thickness of 60 nm. | >90 | => 0 |

Table 2. Examples of conditions for chemical modification of titanium by anodising and carbon compound deposition allowing the regulation of the stationary potential in artificial plasma solution

| Forming conditions | OCP [mV vs. Ag/AgCl] |
|---|---|
| Pure titanium | -465±5 |
| negative surface charge (OCP -300 to 0 mV vs. Ag/AgCl) | |
| TNT manufactured in 85% ethylene glycol + 0.65 wt% NH$_4$F, voltage: 17 V, time: 3750 s | -282±30 |
| TNT manufactured in 85% ethylene glycol + 0.65 wt% NH$_4$F, voltage: 17 V, time: 3750 s Chemical modification: vacuum-deposited carbon with a layer thickness of 35 nm. | -185±10 |
| TNT manufactured in 85% ethylene glycol + 0.65 wt% NH$_4$F, voltage: 17 V, time: 3750 s Chemical modification: vacuum-deposited carbon with a layer thickness of 50 nm. | -160±10 |
| TNT manufactured in 85% ethylene glycol + 0.65 wt% NH$_4$F, voltage: 17 V, time: 3750 s Chemical modification: vacuum-deposited carbon with a layer thickness of 60 nm. | -140±10 |
| positive surface charge (OCP>0 mV) | |
| TNT manufactured in 85% ethylene glycol + 0.65 wt% NH$_4$F, voltage: 17 V, time: 3750 s Chemical modification: graphene transfer | 5±2 |

**Claims**

1. A method of surface modification of titanium by forming a layer of TNT titanium dioxide nanotubes on a titanium substrate using anodization in a two-electrode system, wherein the working electrode is a titanium foil and the reference electrode is a platinum foil, comprising the steps of:

- the titanium foil is cleaned in acetone and distilled water in an ultrasonic cleaner and then dried in a stream of nitrogen;
- the titanium nanotubes with a diameter of 50 ± 5 nm and a height of 1000 ± 100 nm are produced by modifying the titanium by anodising in an aqueous solution containing 85 wt% ethylene glycol and 0.65 wt% $NH_4F$, applying a potential of 17 V for 3750 s;
- the titanium foil with a layer of titanium nanotubes is further chemically modified by:

- graphene transfer onto the surface of nanotubes using a PMMA matrix, in which the total surface of the wetted graphene/PMMA film is placed on a titanium film with a layer of titanium nanotubes, the titanium film is then heated to approximately 70°C and treated with acetone vapour to ensure adhesion of the graphene to the surface of the titanium nanotubes, after which the PMMA film is removed by dissolving in acetone

2. The method according to claim 1, wherein the PMMA film is removed by dissolving in acetone for 24 hours.

3. The method according to claim 1 or 2, wherein a titanium foil having a purity of 99.70% is used.

4. The method according to claim 1 or 2 or 3, wherein a platinum film having a purity of 99.95% is used.

5. The method according to any of the claims 1-4, wherein the titanium foil is cleaned in acetone and distilled water for 10 minutes each, respectively, in an ultrasonic cleaner of 300 W.

6. A method of surface modification of titanium according to claims 1-5, wherein titanium nanotubes with a diameter of 50 ± 5 nm and a height of 1000 ± 100 nm are produced by modifying the titanium by anodizing in an aqueous solution containing 85 wt% ethylene glycol + 0.65 wt% $NH_4F$, applying a potential of 17 V at 3750 s and subjecting the TNT layer to further chemical modification by said graphene transfer, thereby imparting highly hydrophilic properties to a titanium surface with a wetting angle (WCA) of 5° to 35°.

7. A method of surface modification of titanium according to claims 1-5, wherein:

- titanium nanotubes with a diameter of 50 ± 5 nm and a height of 1,000 ± 100 nm are produced by modifying the titanium by anodising in an aqueous solution containing 85 wt% ethylene glycol + 0.65 wt% $NH_4F$, applying a potential of 17 V for 3750 s and undergoing further chemical modification by said graphene transfer,

thereby imparting a positive surface charge to a titanium surface with an open circuit potential (OCP) of greater than 10 mV relative to an Ag/AgCl chlorosilver electrode.

**Patentansprüche**

1. Ein Verfahren zur Oberflächenmodifikation von Titan durch Bilden einer Schicht aus TNT-Titandioxid-Nanoröhren auf einem Titansubstrat unter Verwendung von Anodisierung in einem Zwei-Elektroden-System, wobei die Arbeitselektrode eine Titanfolie ist und die Referenzelektrode eine Platinfolie ist, umfassend die folgenden Schritte:

- die Titanfolie wird in Aceton und destilliertem Wasser in einem Ultraschallreiniger gereinigt und dann in einem Stickstoffstrom getrocknet;
- die Titan-Nanoröhren mit einem Durchmesser von 50 ± 5 nm und einer Höhe von 1000 ± 100 nm werden durch Modifizieren des Titans durch Anodisieren in einer wässrigen Lösung, die 85 Gew.-% Ethylenglykol und 0,65 Gew.-% $NH_4F$ enthält, unter Anlegen eines Potentials von 17 V für 3750 s hergestellt;
- die Titanfolie mit einer Schicht aus Titan-Nanoröhren wird weiter chemisch modifiziert durch:

- Graphenübertragung auf die Oberfläche von Nanoröhren unter Verwendung einer PMMA-Matrix, wobei die Gesamtoberfläche des benetzten Graphen/PMMA-Films auf einem Titanfilm mit einer Schicht aus Titan-Nanoröhren platziert wird, der Titanfilm dann auf ungefähr 70 °C erwärmt wird und mit Acetondampf behandelt wird, um die Haftung des Graphens an der Oberfläche der Titan-Nanoröhren sicherzustellen, woraufhin der PMMA-Film durch Auflösen in Aceton entfernt wird.

2. Das Verfahren gemäß Anspruch 1, wobei der PMMA-Film durch Auflösen in Aceton für 24 Stunden entfernt wird.

3. Das Verfahren gemäß Anspruch 1 oder 2, wobei eine Titanfolie mit einer Reinheit von 99,70 % verwendet wird.

4. Das Verfahren gemäß Anspruch 1 oder 2 oder 3, wobei ein Platinfilm mit einer Reinheit von 99,95 % verwendet wird.

5. Das Verfahren gemäß einem der Ansprüche 1-4, wobei die Titanfolie in Aceton und destilliertem Wasser für jeweils 10 Minuten in einem Ultraschallreiniger mit 300 W gereinigt wird.

6. Ein Verfahren zur Oberflächenmodifikation von Titan gemäß den Ansprüchen 1-5, wobei Titan-Nanoröhren mit einem Durchmesser von 50 ± 5 nm und einer Höhe von 1000 ± 100 nm durch Modifizieren des Titans durch Anodisieren in einer wässrigen Lösung, die 85 Gew.-% Ethylenglykol + 0,65 Gew.-% NH$_4$F enthält, Anlegen eines Potentials von 17 V bei 3750 s und Unterziehen der TNT-Schicht einer weiteren chemischen Modifikation durch die Graphenübertragung hergestellt werden, wodurch einer Titanoberfläche mit einem Benetzungswinkel, WCA, von 5° bis 35° hochhydrophile Eigenschaften verliehen werden.

7. Ein Verfahren zur Oberflächenmodifikation von Titan gemäß den Ansprüchen 1-5, wobei:

- Titan-Nanoröhren mit einem Durchmesser von 50 ± 5 nm und einer Höhe von 1.000 ± 100 nm durch Modifizieren des Titans durch Anodisieren in einer wässrigen Lösung, die 85 Gew.- % Ethylenglykol + 0,65 Gew.-% NH$_4$F enthält, Anlegen eines Potentials von 17 V für 3750 s und Unterziehen einer weiteren chemischen Modifikation durch die Graphenübertragung hergestellt werden,

wodurch einer Titanoberfläche mit einem Leerlaufpotential, OCP, von mehr als 10 mV relativ zu einer Ag/AgCl-Chlorsilberelektrode eine positive Oberflächenladung verliehen wird.

**Revendications**

1. Procédé de modification de surface du titane en formant une couche de nanotubes de dioxyde de titane TNT sur un substrat en titane en utilisant l'anodisation dans un système à deux électrodes, dans lequel l'électrode de travail est une feuille de titane et l'électrode de référence est une feuille de platine, comprenant les étapes suivantes :

- la feuille de titane est nettoyée dans de l'acétone et de l'eau distillée dans un nettoyeur aux ultrasons et puis séchée dans un flux d'azote ;
- les nanotubes de titane ayant un diamètre de 50 ± 5 nm et une hauteur de 1000 ± 100 nm sont produits en modifiant le titane par anodisation dans une solution aqueuse contenant 85 % en poids d'éthylène glycol et 0,65 % en poids de NH$_4$F, application d'un potentiel de 17 V pendant 3750 s ;
- la feuille de titane ayant une couche de nanotubes de titane est en outre modifiée chimiquement par :

- transfert du graphène sur la surface des nanotubes en utilisant une matrice de PMMA, dans laquelle la surface totale du film mouillé de graphène/PMMA est placée sur un film de titane ayant une couche de nanotubes de titane, le film de titane est ensuite chauffé jusqu'à environ 70°C et traité avec de la vapeur d'acétone pour garantir l'adhérence du graphène à la surface des nanotubes de titane, après quoi le film de PMMA est retiré par dissolution dans de l'acétone.

2. Procédé selon la revendication 1, dans lequel le film de PMMA est retiré par dissolution dans de l'acétone pendant 24 heures.

3. Procédé selon la revendication 1 ou 2, dans lequel une feuille de titane ayant une pureté de 99,70 % est utilisée.

4. Procédé selon la revendication 1 ou 2 ou 3, dans lequel un film de platine ayant une pureté de 99,95 % est utilisé.

5. Procédé selon l'une quelconque des revendications 1 à 4, dans lequel la feuille de titane est nettoyée dans de l'acétone et de l'eau distillée pendant 10 minutes à chaque fois, respectivement, dans un nettoyeur aux ultrasons de 300 W.

6. Procédé de modification de surface du titane selon les revendications 1 à 5, dans lequel des nanotubes de titane ayant un diamètre de 50 ± 5 nm et une hauteur de 1000 ± 100 nm sont produits en modifiant le titane par anodisation dans une solution aqueuse contenant 85 % en poids d'éthylène glycol + 0,65 % en poids de NH$_4$F, application d'un potentiel de 17 V à 3750 s et soumission de la couche TNT à une autre modification chimique par ledit transfert de graphène, ce qui confère des propriétés hautement hydrophiles à une surface en titane ayant un angle de mouillage (WCA) de 5° à 35°.

7. Procédé de modification de surface du titane selon les revendications 1 à 5, dans lequel :

- des nanotubes de titane ayant un diamètre de 50 $\pm$ 5 nm et une hauteur de 1000 $\pm$ 100 nm sont produits en modifiant le titane par anodisation dans une solution aqueuse contenant 85 % en poids d'éthylène glycol + 0,65 % en poids de $NH_4F$, application d'un potentiel de 17 V pendant 3750 s et soumission à une autre modification chimique par ledit transfert de graphène,

ce qui confère une charge de surface positive à une surface de titane ayant un potentiel de circuit ouvert (PCO) supérieur à 10 mV par rapport à une électrode de chloro-argent Ag/AgCl.

(a)

(b)

(c)

(d)

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CA 2633531 A1
- CN 113096968 A
- KR 20220037109 A
- CN 110394169 A
- CN 102151561 A
- US 2011135827 A1

### Non-patent literature cited in the description

- **PARADOWSKA et al.** The Influence of the Parameters of a Gold Nanoparticle Deposition Method on Titanium Dioxide Nanotubes, Their Electrochemical Response, and Protein Adsorption. *Biosensors*, 2019, vol. 9 (4), 138